# EUROPÄISCHE PATENTANMELDUNG

(11) **EP 1 495 821 A1**
(43) Veröffentlichungstag der Anmeldung: **12.01.2005**
(21) Anmeldenummer: 04014209.3
(22) Anmeldetag: 17.06.2004
(51) Int. Cl.: B23B 27/10, B23B 27/04

(54) **Drehmeisselhalter**

(30) Priorität: 09.07.2003 DE 10331077
(71) Anmelder: Graf, Ernst, 78661 Dietingen (DE)
(72) Erfinder: Graf, Ernst, 78661 Dietingen (DE)
(74) Vertreter: Späth, Dieter, Dipl.-Ing.

(57) **Zusammenfassung**

Die Erfindung betrifft einen Vierkant-Drehmeißelhalter (10) für insbesondere einen Abstechmeißel (16). Die Erfindung schlägt vor, den Drehmeißelhalter (10) mit ineinander übergehenden Bohrungen zu versehen, die einen Kühlschmiermittelkanal bilden, aus dessen Mündung (44) ein Kühlschmiermittelstrahl (46) so austritt, dass er an oder dicht oberhalb einer Schneide (18) eines Drehmeißels (16) auf ein nicht dargestelltes Werkstück trifft. Der Kühlschmiermittelstrahl (46) ist so stark, dass er einen Drehspan bricht.

## Beschreibung

Die Erfindung betrifft einen Drehmeißelhalter mit den Merkmalen des Oberbegriffs des Anspruchs 1 sowie ein Verfahren zu seiner Verwendung gemäß dem Oberbegriff des Anspruchs 6. Drehmeißel werden auch als Drehstähle oder Drehwerkzeuge bezeichnet.

Es ist ein Drehmeißelhalter bekannt aus der DE 693 23 756 T2. Der bekannte Drehmeißelhalter weist einen Kühlschmiermittelkanal mit einer verstellbaren Düse an seiner werkstückseitigen Mündung auf. Die Düse ist achsparallel zu einem spanend zu bearbeitenden Werkstück und in ihrem Winkel zu einer Horizontalen einstellbar. Dadurch ist ein Kühlschmiermittelstrahl so lenkbar, dass er beim Drehen an oder oberhalb einer Schneide eines am Drehmeißelhalter befestigten Drehmeißels und in einer Radialebene zum Werkstück auf eine Oberfläche des Werkstücks trifft. Dies hat insbesondere beim Ein- und Abstechen den Vorteil, dass der Kühlschmiermittelstrahl auch bei einer tiefen Einstechnut auf die bearbeitete Oberfläche des Werkstücks, also auf den Nutgrund, und nicht seitlich der Nut auf die Oberfläche des Werkstücks trifft. Allerdings ist der bekannte Drehmeiselhalter mit seiner achsparallel zur Werkstückoberfläche und in seinem Horizontalwinkel verstellbaren Düse aufwendig. Außerdem erfordert der bekannte Drehmeiselhalter eine Ausrichtung der Düse. Als Kühlschmiermittel wird üblicherweise ein wasserlösliches Öl (Schneidöl) verwendet.

Der Erfindung liegt die Aufgabe zugrunde, einen einfacheren Drehmeißelhalter der vorstehend erläuterten Art vorzuschlagen.

Diese Aufgabe wird erfindungsgemäß durch die Merkmale des Anspruchs 1 gelöst. Der erfindungsgemäße Drehmeißelhalter weist keine verstellbare Düse auf, er kommt ohne bewegliche Teile aus. Eine Mündung des Kühlschmiermittelkanals des erfindungsgemäßen Drehmeißelhalters ist so angeordnet und ausgerichtet, dass ein Kühlschmiermittelstrahl an oder über einer Schneide eines am Drehmeißelhalter befestigten Drehmeißels auf eine spanend zu bearbeitende Oberfläche eines Werkstücks trifft. Da Drehmeißelhalter vielfach für bestimmte Drehmeißel ausgebildet sind befindet sich eine Schneide des Drehmeißels an einer vorgegebenen Stelle in Bezug auf den Drehmeißelhalter, so dass die feste und unveränderliche Ausrichtung der Mündung des Kühlschmiermittelkanals auf zumindest näherungsweise die Stelle, an der sich die Schneide des Drehmeißels befindet, unproblematisch und möglich ist. Der Kühlschmiermittelkanal lässt sich als eine oder mehrere einander winklig mit Drehmeißelhalter fortsetzende Bohrungen und dadurch einfach und preisgünstig herstellen. Bewegliche Teile sind nicht erforderlich, der Drehmeißelhalter kann aus einem Stück gefertigt sein. Der erfindungsgemäße Drehmeißelhalter eignet sich für Langdrehautomaten mit begrenztem Spanraum. Der Drehmeißel kann auch ein Schneideinsatz sein.

Bei einer Ausgestaltung der Erfindung ist die Mündung des Kühlschmiermittelkanals oberhalb eines am Drehmeißelhalter befestigten Drehmeißels angeordnet, wobei sich "oberhalb" auf eine vorgesehene Arbeitslage des Drehmeißelhalters bezieht. Der Kühlschmiermittelstrahl trifft dadurch an oder oberhalb der Schneide des Drehmeißels auf die Oberfläche des bearbeiteten Werkstücks.

Eine Ausgestaltung der Erfindung sieht vor, dass die Mündung des Kühlschmiermittelkanals so ausgerichtet ist, dass ein Kühlschmiermittelstrahl parallel zu einer Oberseite eines am Drehmeißel befestigten Drehmeißel, d. h. in etwa horizontal austritt. Auch dadurch wird die gewünschte Ausrichtung des Kühlschmiermittelstrahls auf die Schneide des Drehmeißels erreicht.

Der erfindungsgemäße Drehmeißelhalter ist insbesondere stabförmig, vorzugsweise handelt es sich um einen Vierkantdrehmeißelhalter. Die Mündung des Kühlschmiermittelkanals mündet so, dass der Kühlschmiermittelstrahl in Längsrichtung des Drehmeißelhalters austritt. Auch dadurch wird die gewünschte Ausrichtung des Kühlschmiermittelstrahls auf eine Schneide des Drehmeißels erreicht wenn sich dessen Schneide in Verlängerung des Drehmeißelhalters befindet, was an sich vorgesehen ist.

Insbesondere ist der Drehmeißelhalter als Stechmeißelhalter zum Einstechen einer Nut oder zum Abstechen eines Werkstücks vorgesehen.

Das erfindungsgemäße Verfahren mit den Merkmalen des Anspruchs 6 sieht einen scharfen Kühlschmiermittelstrahl vor, der mit einer derart hohen Geschwindigkeit und Energiedichte auf einen Drehspan trifft, dass der Drehspan getrennt (gebrochen) wird. Eine hohe Kühlschmiermittelgeschwindigkeit wird durch einen ausreichend hohen Kühlschmiermitteldruck in einer Zuleitung erreicht. Die Mündung des Kühlschmiermittelkanals ist so zu formen, dass der Kühlschmiermittelstrahl wenig auffächert (divergiert) und die Mündung ist nahe an der Schneide des Drehmeißels anzuordnen. Das erfindungsgemäße Verfahren hat den Vorteil kurzer Späne und vermindert dadurch eine Unfall- und Verletzungsgefahr und setzt eine Ausfallwahrscheinlichkeit durch sich am drehenden Werkstück und in einer Drehmaschine verfangende Drehspäne herab. Insbesondere bei einem kleinen Spanraum sollten lange Späne vermieden werden. Als Abfall nehmen kurze Späne ein geringeres Volumen als lange Späne ein.

Die Erfindung wird nachfolgend anhand eines in der Zeichnung dargestellten Ausführungsbeispiels näher erläutert. Es zeigen:
- Figur 1: einen erfindungsgemäßen Drehmeißelhalter in perspektivischer Darstellung;
- Figur 2: eine Seitenansicht des Drehmeißelhalters aus Figur 1 mit Blick auf eine andere Längsseite;
- Figur 3: einen Längsschnitt des Drehmeißelhalters aus Figur 1 in einer vertikalen Längsmittelebene gemäß Linie III-III in Figur 4; und
- Figur 4: einen abgewinkelten Längsschnitt des Drehmeißelhalters aus Figur 1 in einer Horizontalebene entlang Linie IV-IV in Figur 3.

Der in der Zeichnung dargestellte, erfindungsgemäße Drehmeißelhalter 10 ist als Vierkant-Drehmeißelhalter 10 ausgebildet, d. h. er weist einen Vierkantschaft 12 auf. Im dargestellten und beschriebenen Ausführungsbeispiel der Erfindung weist der Vierkantschaft 12 einen quadratischen Querschnitt auf. Seitlich an einem vorderen Ende des Drehmeißelhalters 10 ist eine flache Ausnehmung 14 für einen Drehmeißel 16 angebracht. Der Drehmeißel 16 ist ein Abstechmeißel, es handelt sich um einen Schneideinsatz mit zwei Schneiden 18, 20, deren eine Schneide 18 zum Spanen vorn über den Drehmeißelhalter 10 vorsteht und deren andere Schneide 20 in der Ausnehmung 14 einliegt. Der Drehmeißel 16 liegt passgenau in der Ausnehmung 14 des Drehmeißelhalters 10 ein und ist mit zwei Schrauben 22 befestigt, die den Drehmeißelhalter 10 quer durchsetzen. Die Ausnehmung 14, in der der Drehmeißel 16 passgenau einliegt, und die Schrauben 22 bilden eine Einrichtung 14, 22 zum Befestigen des Drehmeißels 16.

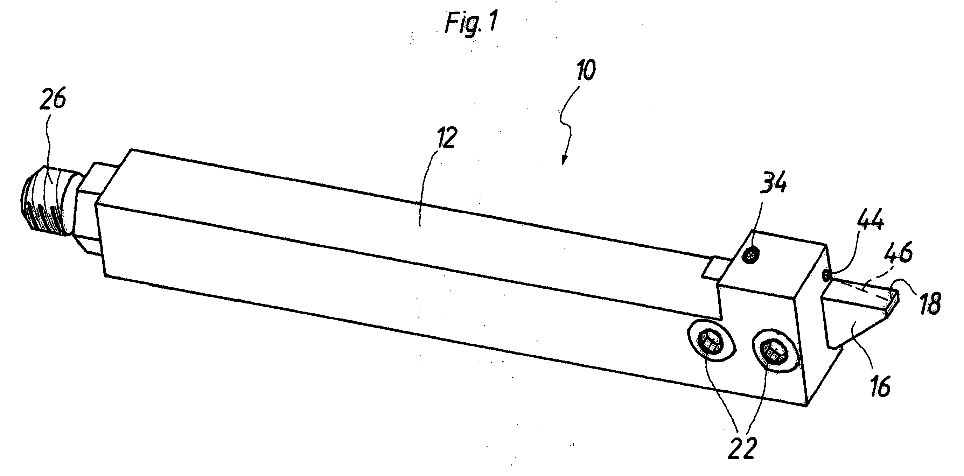

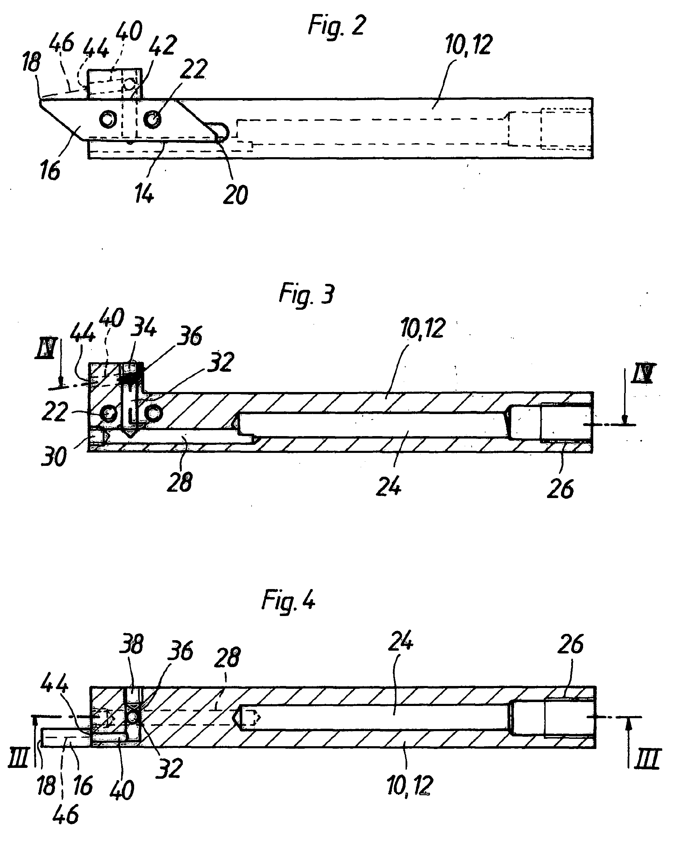

Zum Kühlen und Schmieren der Schneide 18 beim spanenden Bearbeiten sind im Drehmeißelhalter 10 Bohrungen angebracht, die einen Kühlschmiermittelkanal bilden: Eine erste Bohrung 24 mit im Vergleich zu den weiteren Bohrungen großem Durchmesser durchsetzt den Vierkantschaft 12 des Drehmeißelhalters 10 in dessen Längsrichtung auf einem größten Teil seiner Länge. Die erste Bohrung 24 weist an einem hinteren Ende des Drehmeißelhalters 10 ein Anschlussgewinde 26 zum Anschluss einer nicht dargestellten Druckleitung auf. Die erste Bohrung 24 ist als Sackbohrung ausgeführt, sie endet in einem vorderen Bereich des Drehmeißelhalters 10. Vom vorderen Ende des Drehmeißelhalters 10 ist eine zweite Bohrung 28 im Drehmeißelhalter 10 angebracht, die ebenfalls in Längsrichtung des Drehmeißelhalters 10 verläuft, die gegenüber der ersten Bohrung 24 um etwa deren Radius nach unten versetzt ist und die in die erste Bohrung 24 mündet. Am vorderen Ende des Drehmeißelhalters 10 ist die zweite Bohrung 28 mit einer Madenschraube 30 dicht verschlossen. Im vorderen Bereich des Drehmeißelhalters 10 ist eine Vertikalbohrung 32 von oben her angebracht. Die Vertikalbohrung 32 befindet sich in einer Längsmitte des Drehmeißelhalters 10, sie mündet in die zweite Bohrung 28. Die Vertikalbohrung 32 ist als Sackbohrung ausgeführt, ihr offenes Ende ist an der Oberseite des Drehmeißelhalters 10 mit einer Madenschraube 34 dicht verschlossen. Oberhalb der Ausnehmung 14 für den Drehmeißel 16 ist eine Querbohrung 36 im Drehmeißelhalter 10 angebracht, die die Vertikalbohrung 32 kreuzt. Auch die Querbohrung 36 ist als Sackbohrung ausgeführt, ihr offenes Ende ist ebenfalls mit einer Madenschraube 38 dicht verschlossen. Oberhalb der Ausnehmung 14 für den Drehmeißel 16 ist eine Mündungsbohrung 40 im Drehmeißelhalter 10 angebracht. Die Mündungsbohrung 40 verläuft von der Querbohrung 36 schräg nach unten, sie ist in Richtung der Schneide 18 des Drehmeißels 16 ausgerichtet. Von oben gesehen (Figur 3) verläuft die Mündungsbohrung 40 in einer Längsmitte des Drehmeißels 16. Auch die Mündungsbohrung 40 ist als Sackbohrung ausgeführt, sie mündet in die Querbohrung 36. Durch die Querbohrung 36, die Vertikalbohrung 32 und die zweite Bohrung 28 kommuniziert die Mündungsbohrung 40 mit der ersten Bohrung 24, die das Anschlussgewinde 26 für den Anschluss der nicht dargestellten Druckleitung aufweist. Die Bohrungen 24, 28, 32, 36, 40 bilden wie eingangs dieses Absatzes gesagt einen Kühlschmiermittelkanal 24, 28, 32, 36, 40. Eine Mündung 44 der Mündungsbohrung 40 bildet zugleich eine Mündung des Kühlschmiermittelkanals 24, 28, 32, 36, 40. Die Mündungsbohrung 40 bzw. die Mündung 44 sind so angeordnet und ausgerichtet, dass ein in Figuren 1, 2 und 4 mit Strichlinien dargestellter Kühlschmiermittelstrahl 46 dicht oberhalb der Schneide 18 oder an der Schneide 18 des Drehmeißels 16 auf eine Oberfläche eines nicht dargestellten Werkstücks trifft. Erfindungsgemäß wird ein Kühlschmiermittel mit einem derartigen Druck der ersten Bohrung 24 zugeführt, dass der Kühlschmiermittelstrahl 46 einen bei spanender Bearbeitung entstehenden Drehspan bricht, d. h. in kurze Späne trennt.

Der erfindungsgemäße Drehmeißelhalter 10 hat den Vorteil, dass der Kühlschmiermittelkanal 24, 28, 32, 36, 40. integriert ist und keinen zusätzlichen Bauraum benötigt. Eine Ausrichtung des Kühlschmiermittelstrahls 46 auf die Schneide 18 des Drehmeißels 16 ist sichergestellt und muss nicht eingestellt werden. Der Drehmeißelhalter 10 ist kompakt und benötigt wenig Bau- und Freiraum im Bereich einer Bearbeitungsstelle. Dadurch dass mit dem erfindungsgemäßen Verfahren lange Drehspäne vermieden werden genügt ein kleiner Freiraum im Bereich der Bearbeitungsstelle auch als Spanraum zum Abführen der Drehspäne. Der erfindungsgemäße Drehmeißelhalter 10 eignet sich daher für Langdrehautomaten mit begrenztem Frei- und Spanraum im Bereich einer Bearbeitungsstelle.

## Patentansprüche

1. Drehmeißelhalter, mit einer Einrichtung zum Befestigen eines Drehmeißels und mit einem Kühlschmiermittelkanal ohne verstellbare Düse, **dadurch gekennzeichnet, dass** eine Mündung (44) des Kühlschmiermittelkanals (24, 28, 32, 36, 40) so angeordnet und ausgerichtet ist, dass ein Kühlschmiermittelstrahl (46) an oder über einer Schneide (18) eines am Drehmeißelhalter (10) befestigten Drehmeißels (16) auf eine spanend zu bearbeitende Oberfläche eines Werkstücks trifft.

2. Drehmeißelhalter nach Anspruch 1, **dadurch gekennzeichnet, dass** die Mündung (44) oberhalb der Einrichtung (14) zum Befestigen des Drehmeißels (16) angeordnet ist.

3. Drehmeißelhalter nach Anspruch 1 oder 2, **dadurch gekennzeichnet, dass** die Mündung (44) des Kühlschmiermittelkanals (24, 28, 32, 36, 40) so ausgerichtet ist, dass ein Kühlschmiermittelstrahl (46) parallel zu einer Oberseite (42) eines am Drehmeißelhalter (10) befestigten Drehmeißels (16) austritt.

4. Drehmeißelhalter nach einem der Ansprüche 1 bis 3, **dadurch gekennzeichnet, dass** der Drehmeißelhalter (10) stabförmig ist, und dass die Mündung (44) des Kühischmiermittelkanals (24, 28, 32, 36, 40) in einer Längsrichtung des Drehmeißelhalters (10) mündet.

5. Drehmeißelhalter nach einem der Ansprüche 1 bis 4, **dadurch gekennzeichnet, dass** der Drehmeißelhalter (10) ein Abstechmeißelhalter ist.

6. Verfahren zum spanenden Bearbeiten eines Werkstücks durch Drehen, wobei ein Kühlschmiermittelstrahl an oder oberhalb einer Schneide eines Drehmeißels auf eine Oberfläche des Werkstücks trifft, **dadurch gekennzeichnet, dass** der Kühlschmiermittelstrahl (46) mit einer derart hohen Geschwindigkeit und Energiedichte auf einen Drehspan trifft, das der Drehspan getrennt wird.
